# EUROPÄISCHE PATENTSCHRIFT

(11) **EP 2 584 375 B1**
(45) Veröffentlichungstag und Bekanntmachung des Hinweises auf die Patenterteilung: **24.09.2014**
(21) Anmeldenummer: 11008390.4
(22) Anmeldetag: 18.10.2011
(51) Int. Cl.: G01S 17/02, E05F 15/20

(54) **Türüberwachungssensor und Verfahren zum Überwachen der Gegenschliesskante einer Tür, insbesondere einer Karusseltür**
Door monitoring sensor and method for monitoring the counter closing edge of a door, in particular of a revolving door
Capteur de surveillance de porte et procédé de surveillance de la contre-arête de fermeture d'une porte, notamment d'une porte tournante

(43) Veröffentlichungstag der Anmeldung: 24.04.2013
(73) Patentinhaber: Pepperl & Fuchs GmbH, 68307 Mannheim (DE)
(72) Erfinder: Jurgeit, Ralph-Rainer, 16356 Ahrensfelde (DE); Bartsch, Stephan, 12207 Berlin (DE); Nutz, Karl, 15370 Petershagen (DE)
(74) Vertreter: Schiffer, Axel Martin

(56) Entgegenhaltungen:
- DE-A1-102007 051 133
- DE-B3-102007 014 034
- US-A1- 2001 035 636
- US-B1- 6 298 311

## Beschreibung

Die vorliegende Erfindung bezieht sich in einem ersten Aspekt auf einen Türüberwachungssensor zum Überwachen der Gegenschließkante einer Tür, insbesondere einer Karusselltür, nach den Ansprüchen 1 bzw. 4.

In einem weiteren Gesichtspunkt betrifft die Erfindung ein Verfahren zum Überwachen der Gegenschließkante einer Tür, insbesondere einer Karusselltür, nach den Ansprüchen 6 bzw. 7.

Ein gattungsgemäßer Türüberwachungssensor zum Überwachen der Gegenschließkante einer Tür, insbesondere einer Karusselltür, weist eine Sender-Empfänger- Einrichtung auf, welche einen Lichtsender zum Aussenden von mindestens einem Messlichtstrahl in einen Überwachungsraum im Bereich der Gegenschließkante der Tür und einen Lichtdetektor mit mindestens einem Empfangselement zum Nachweisen von aus dem Überwachungsraum zurückgeworfenen Messlichtstrahlen aufweist, und eine Steuer- und Auswerteeinrichtung, die dazu eingerichtet ist, abhängig von Messsignalen, die aus den nachgewiesenen Messlichtstrahlen erzeugt werden, ein Objektfeststellungssignal auszugeben.

Bei einem bekannten Verfahren der oben genannten Art wird mit einer Sender-Empfänger-Einrichtung mindestens ein Messlichtstrahl in einen Überwachungsraum im Bereich der Gegenschließkante der Tür gesendet, aus dem Überwachungsraum zurückgeworfene Messlichtstrahlen werden mit der Sender-Empfänger-Einrichtung nachgewiesen und abhängig von Messsignalen, die aus den nachgewiesenen Messlichtstrahlen erzeugt werden, wird ein Objektfeststellungssignal ausgegeben.

Ein grundlegendes Ziel ist die Erkennung von Personen oder sonstigen Objekten im Bereich von Türen, insbesondere Karusselltüren, Toren oder Aufzügen, für sicherheitsrelevante Anwendungen. Hierbei soll ein Einklemmen einer Person, beispielsweise eines Arms der Person, zwischen der Hauptschließkante und der Gegenschließkante der Tür vermieden werden. Als Gegenschließkante sollen die Kanten eines Türrahmens der Tür verstanden werden. Die Hauptschließkante bezeichnet hingegen diejenige Kante eines Türflügels, die zusammen mit der Gegenschließkante einen Durchgang, etwa für eine Person, bildet.

Bekannte optische Intensitätstaster, die für solche Anwendungen eingesetzt werden, sind preiswert aber vergleichsweise unsicher. Ein Intensitätstaster sendet einen Messlichtstrahl aus und empfängt das beispielsweise vom Boden zurückgeworfene Licht. Detektionskriterium ist oft eine plötzliche Veränderung der empfangenen Lichtmenge. Langsame Signalveränderungen können für eine Unempfindlichkeit gegen Verschmutzung, Alters- und Temperaturdriften eingelernt werden. Wenn nun ein dunkles Objekt, beispielsweise ein Arm einer Person, vor einem hellen Boden auftaucht, kann die geringere Lichtreflexion des Arms durch eine geringere Entfernung zum Taster gerade so ausgeglichen werden, dass der Arm nicht vom Boden unterschieden werden kann. Bei einer sich automatisch schließenden Tür besteht die Gefahr, dass dann der Arm an der Hauptschließkante des Türblatts eingeklemmt wird. Auch bei einer Kraftbegrenzung einer schließenden Tür kann wegen der Bewegungsenergie Tür trotzdem ein Arm stark gequetscht oder gebrochen werden.

Im Stand der Technik sind mehrere Lösungen bekannt, dieses Problem zu umgehen. So können Triangulationstaster eingesetzt werden, die den geringeren Abstand des Objekts im Vergleich zum Boden erkennen. Hiermit können aber flache Objekte am Boden nicht sicher erkannt werden. Weiterhin erfordert dies vergleichsweise hohe Kosten und es werden keine Flächen überwacht, da man mit großen Senderabbildungen störende Struktureffekte erhält.

Bekannt sind auch Kombinationen von Intensitätstastern mit entfernungsmessenden Vorrichtungen, die etwa nach dem Lichtlaufzeitverfahren arbeiten. Dies ist ebenfalls mit vergleichsweise hohen Kosten verbunden. Weiterhin können mehrere Intensitätstaster eingesetzt werden, die mit Licht verschiedener Wellenlängenbereiche arbeiten. Auch diese Lösung erfordert aber beträchtliche Kosten.

Schließlich können auch aufwendige Bildverarbeitungsverfahren eingesetzt werden, was aber ebenfalls im Hinblick auf die Kosten und den Entwicklungsaufwand nicht attraktiv ist.

Die DE 10 2007 051 133 A1 betrifft ein Türsystem mit einer Sensorvorrichtung für die Überwachung von vertikalen Türkanten. Um ein Türsystem für die Überwachung von vertikalen Türkanten bereitzustellen, mit welchem sich eine höhere Überwachungssicherheit erzielen lässt, wird darin ein System mit einer Sensorvorrichtung vorgeschlagen, bei dem ein Element der Sensorvorrichtung im Bereich des Bodens, vorzugsweise im oder auf dem Boden vor einer vertikalen Türkante montiert ist.

Als eine Aufgabe der Erfindung kann angesehen werden, einen Türüberwachungssensor und ein Verfahren zum Überwachen der Gegenschließkante einer Tür, insbesondere einer Karusselltür, anzugeben, welche besonders zuverlässig arbeiten und gleichzeitig kostengünstig sind.

Diese Aufgabe wird durch den Türüberwachungssensor mit den Merkmalen der Ansprüche 1 bzw. 4 und durch das Verfahren mit den Merkmalen der Ansprüche 6 bzw. 7 gelöst.

Vorteilhafte Ausgestaltungen des erfindungsgemäßen Türüberwachungssensors und bevorzugte Varianten des erfindungsgemäßen Verfahrens sind Gegenstand der abhängigen Ansprüche und werden außerdem in der folgenden Beschreibung, insbesondere im Zusammenhang mit den Figuren, beschrieben.

Bei dem Türüberwachungssensor der oben genannten Art ist erfindungsgemäß vorgesehen, dass die Sender-Empfänger-Einrichtung dazu eingerichtet ist, Messlichtstrahlen in einen flächigen, insbesondere fächerartigen, Überwachungsbereich des Überwachungsraums zu senden, wobei der flächige Überwachungsbereich mindestens eine mittlere Zone, mindestens eine erste seitliche Zone und mindestens eine zweite seitliche Zone aufweist und sich die erste und die zweite seitliche Zone in einer Richtung quer zu einer Ausbreitungsrichtung der ausgesandten Messlichtstrahlen auf gegenüberliegenden Seiten der mittleren Zone befinden, dass die Sender-Empfänger-Einrichtung dazu eingerichtet ist, Messlichtstrahlen von jeweils unterschiedlichen beleuchteten Punkten auf einem nachzuweisenden Objekt aus der mittleren Zone und der ersten und zweiten seitlichen Zone des Überwachungsbereichs getrennt voneinander nachzuweisen, und dass die Steuer- und Auswerteeinrichtung dazu eingerichtet ist, aus Intensitäten der nachgewiesenen Messlichtstrahlen aus der mittleren Zone, der ersten seitlichen Zone und der zweiten seitlichen Zone jeweils ein Messsignal zu erzeugen, die Messsignale mit mindestens einem Schwellwert zu vergleichen und abhängig von einem Ergebnis dieser Vergleiche ein Objektfeststellungssignal auszugeben.

Bei dem Verfahren der oben genannten Art ist erfindungsgemäß vorgesehen, dass die Sender-Empfänger-Einrichtung Messlichtstrahlen in einen flächigen, insbesondere fächerartigen, Überwachungsbereich des Überwachungsraums sendet, wobei der flächige Überwachungsbereich mindestens eine mittlere Zone, mindestens eine erste seitliche Zone und mindestens eine zweite seitliche Zone aufweist und die erste und die zweite seitliche Zone sich in einer Richtung quer zu einer Ausbreitungsrichtung der ausgesandten Messlichtstrahlen auf gegenüberliegenden Seiten der mittleren Zone befinden, dass mit der Sender-Empfänger-Einrichtung Messlichtstrahlen von jeweils unterschiedlichen beleuchteten Punkten auf einem nachzuweisenden Objekt aus der mittleren Zone und der ersten und zweiten seitlichen Zone des Überwachungsbereichs getrennt voneinander nachgewiesen werden und dass aus Intensitäten der nachgewiesenen Messlichtstrahlen aus der mittleren Zone, der ersten seitlichen Zone und der zweiten seitlichen Zone jeweils ein Messsignal erzeugt wird, die Messsignale mit mindestens einem Schwellwert verglichen werden und abhängig von einem Ergebnis dieser Vergleiche ein Objektfeststellungssignal ausgegeben wird.

Als wesentlichen Vorteil erlauben der Türüberwachungssensor und das Verfahren gemäß der Erfindung eine besonders sichere Erkennung von gewölbten oder rundlichen Objekten, beispielsweise von einem Arm einer Person.

Als ein Kerngedanke der Erfindung kann angesehen werden, die rundliche Form eines Objekts, im gewählten Beispiel des Arms, auszunutzen. Mit der Sender-Empfänger-Einrichtung kann eine Fläche insbesondere mit einer homogenen Intensität beleuchtet werden. Wegen der rundlichen Form des Arms werfen verschiedene Abschnitte des Arms unterschiedlich viel Messlicht in Richtung der Sender-Empfänger-Einrichtung zurück. So wird von einem mittleren Abschnitt des Arms mehr Licht zurückgeworfen als von seitlichen Abschnitten des Arms. Dies gilt auch, wenn das Objekt beziehungsweise der Arm eine gleichmäßige Farbe und Helligkeit aufweist.

Eine wesentliche Idee der Erfindung kann darin gesehen werden, dass ein nachzuweisendes Objekt an mindestens drei unterschiedlichen Punkten beleuchtet wird. Hierzu werden Sendelichtstrahlen in eine mittlere Zone sowie in seitliche Zonen ausgesendet, welche quer zu einer Ausbreitungsrichtung der ausgesandten Messlichtstrahlen versetzt sind. Wegen der rundlichen Form des Objekts wird unterschiedlich viel Licht aus den verschiedenen Zonen zurückgeworfen. Dies findet unabhängig von der konkreten Position des Objekts im Überwachungsraum statt. Vorteilhafterweise kann deshalb das Objekt an jeder beliebigen Position innerhalb des Überwachungsraums nachgewiesen werden. Die vorgenannte Problematik, dass ein dunkles Objekt vor einem hellen Boden bei einer bestimmten Entfernung nicht sicher erkannt wird, besteht somit vorteilhafterweise nicht.

Im Gegensatz zu Triangulationssensoren, die einen punktförmigen Bereich eines Überwachungsraums bestrahlen, wird erfindungsgemäß ein flächiger Überwachungsbereich im Überwachungsraum bestrahlt. Durch einen flächigen Bereich kann eine Form eines Objekts im Überwachungsbereich vorteilhafterweise in der Auswertung der Messsignale berücksichtigt werden. Dabei kann unter einem flächigen Überwachungsbereich eine Fläche verstanden werden, die in mindestens drei getrennt voneinander untersuchbare Zonen geteilt ist. Jede Zone wird von dem Empfängerelement oder den Empfängerelementen unter einem anderen Winkel gesehen. Bei einem gebogenen Objekt werden hierdurch verschiedene Lichtstärken aus den drei Zonen empfangen. Dadurch kann vorteilhafterweise ein gebogenes oder rundliches Objekt wie ein Arm zuverlässig von einem flachen Untergrund unterschieden werden, unabhängig von der Position des Objekts im Überwachungsraum.

Ein Durchmesser des flächigen Überwachungsbereichs kann insbesondere dem Durchmesser eines menschlichen Arms, etwa 5 cm, entsprechen.

Die verschiedenen Zonen des Überwachungsbereichs können einander teilweise überlappen. Bevorzugt sind diese jedoch beabstandet voneinander oder aneinander angrenzend. Dadurch ruft eine Rundung eines Objekts im Überwachungsraum größere Intensitätsdifferenzen zwischen den Messlichtstrahlen der verschiedenen Zonen hervor.

Der erfindungsgemäße Türüberwachungssensor soll dergestalt montiert werden, dass der flächige Bereich quer, insbesondere senkrecht, zu der Türfläche einer zu überwachenden Tür angeordnet ist.

Bei einem bevorzugten Ausführungsbeispiel des erfindungsgemäßen Türüberwachungssensors weist der Lichtdetektor mindestens ein mittleres Empfangselement und zwei seitliche Empfangselemente auf, welche so angeordnet sind, dass ein aus der mittleren Zone kommender Messlichtstrahl auf das mittlere Empfangselement trifft und aus den zwei seitlichen Zonen kommende Messlichtstrahlen auf die zwei seitlichen Empfangselemente treffen. Somit wird eine Unterteilung des Überwachungsbereichs in mindestens drei Zonen durch die verschiedenen Empfangselemente des Lichtdetektors erreicht. Ein nachzuweisendes Objekt im Überwachungsraum wird dabei auf alle Empfangselemente abgebildet.

Es ist bei dieser Ausführung nicht erforderlich, dass der Lichtsender mehrere Senderelemente zum separaten Aussenden von Messlichtstrahlen in die einzelnen Zonen aufweist. Bevorzugt weist der Lichtsender genau ein Senderelement zum Aussenden von Messlicht in sowohl die mittlere Zone als auch die erste und zweite seitliche Zone auf. Somit bestrahlt hier das genau eine Sendeelement den flächigen Überwachungsbereich. Hierdurch ist eine besonders kostengünstige Herstellung des erfindungsgemäßen Türüberwachungssensors möglich.

Bei einem bevorzugten Ausführungsbeispiel ist zum aufgefächerten Aussenden der Messlichtstrahlen in die mittlere und die zwei seitlichen Zonen mindestens eine Sendeoptik vorhanden. Die Sendeoptik kann beispielsweise durch eine Linse, insbesondere eine Fresnel-Linse, gebildet sein. Bevorzugt werden die Messlichtstrahlen mit räumlich gleicher Intensität in die verschiedenen Zonen gesendet. Hierdurch kann ein Objekt sicherer von einem Untergrund unterschieden werden.

Bei einer bevorzugten Variante des erfindungsgemäßen Türüberwachungssensors ist vorgesehen, dass eine Empfangsoptik, insbesondere eine Linse, zum Leiten eines Messlichtstrahls aus der mittleren Zone auf das mittlere Empfangselement, zum Leiten eines Messlichtstrahls aus der ersten seitlichen Zone auf das erste seitliche Empfangselement und zum Leiten eines Messlichtstrahls aus der zweiten seitlichen Zone auf das zwei seitliche Empfangselement vorhanden ist und dass zwischen der Empfangsoptik und dem Lichtdetektor eine Blende vorhanden ist, welche zum Erzeugen von Blindbereichen zwischen der mittleren und den zwei seitlichen Zonen jeweils eine Fläche zwischen zwei benachbarten Empfangselementen abdeckt. Durch die Blende und die daraus resultierenden Blindbereiche weisen die mittlere Zone und die zwei seitlichen Zonen größere Abstände voneinander auf. Vorteilhafterweise unterscheiden sich hierdurch die von einem gekrümmten oder rundlichen Objekt aus den verschiedenen Zonen zurückgeworfene Messlichtintensitäten stärker voneinander. Dies erhöht die Zuverlässigkeit der Objekterkennung.

Bei einer bevorzugten Ausgestaltung des erfindungsgemäßen Türüberwachungssensors weist der Lichtsender mindestens drei Senderelemente auf, von denen ein mittleres Senderelement einen Messlichtstrahl in die mittlere Zone aussendet und zwei seitliche Senderelemente Messlichtstrahlen in die zwei seitlichen Zonen aussenden. Bei dieser Ausführung wird der Überwachungsbereich also durch die verschiedenen Senderelemente in unterschiedliche Zonen aufgeteilt. Um die Messlichtstrahlen der einzelnen Senderelemente getrennt voneinander nachzuweisen, ist bevorzugt vorgesehen, dass die Steuer- und Auswerteeinrichtung dazu eingerichtet ist, die mindestens drei Senderelemente zum sequenziellen Aussenden der Messlichtstrahlen anzusteuern. Zu jedem Zeitpunkt sendet also nur eines der Senderelemente Messlichtstrahlen aus.

Bei einer bevorzugten Variante des erfindungsgemäßen Türüberwachungssensors weist der Lichtdetektor mindestens ein Empfangselement, insbesondere genau ein Empfangselement auf, welches so angeordnet ist, dass sowohl aus der mittleren Zone als auch aus den zwei seitlichen Zonen kommende Messlichtstrahlen auf das Empfangselement auftreffen. Eine Unterscheidung zwischen Messlichtstrahlen aus den jeweiligen Zonen kann dadurch erfolgen, dass die verschiedenen Zonen, wie vorstehend beschrieben, nacheinander beleuchtet werden.

Bei einer bevorzugten Variante des erfindungsgemäßen Verfahrens wird ein Objektfeststellungssignal ausgegeben, wenn die Intensität des nachgewiesenen Messlichtstrahls aus der mittleren Zone die Intensitäten der nachgewiesenen Messlichtstrahlen aus der ersten und der zweiten seitlichen Zone jeweils um einen vorgegebenen Schwellwert überschreitet. Hiermit kann ein rundliches Objekt besonders zuverlässig erkannt werden, weil dessen Oberfläche in einem mittleren Bereich des Objekts am ehesten senkrecht zu den ausgesandten Messlichtstrahlen steht und daher am meisten Licht zu der Sender-Empfänger-Einrichtung zurückwirft. Befindet sich das Objekt mittig im Überwachungsraum, ist die Intensität des nachgewiesenen Messlichtstrahls aus der mittleren Zone größer als die Intensitäten der nachgewiesenen Messlichtstrahlen aus den seitlichen Zonen.

Die Zuverlässigkeit des Türüberwachungssensors und des Verfahrens gemäß der Erfindung kann weiter gesteigert werden, wenn mehr als drei Zonen im Überwachungsbereich gebildet werden. Hierzu können mehr als drei Senderelemente und/oder mehr als drei Empfangselemente vorhanden sein. Die Steuer- und Auswerteeinrichtung vergleicht dann die aus den mittleren Zonen nachgewiesenen Lichtintensitäten mit denen aus den seitlichen Zonen.

Bei einer zweckmäßigen Ausführungsvariante des erfindungsgemäßen Verfahrens wird der Türüberwachungssensor am Einsatzort dergestalt montiert, dass eine durch den flächigen Überwachungsbereich definierte Fläche in Richtung der zu überwachenden Gegenschließkante und quer zu einer Fläche des Türblatts der Tür ausgerichtet ist. Bevorzugt wird der Türüberwachungssensor oberhalb des Türrahmens und bezüglich des Türblatts nicht-mitfahrend angebracht.

Weitere Vorteile und Merkmale der Erfindung werden nachstehend mit Bezug auf die beigefügten schematischen Figuren beschrieben. Hierin zeigen:
- Fig. 1: eine schematische Darstellung eines ersten Ausführungsbeispiels eines erfindungsgemäßen Türüberwachungssensors;
- Fig. 2: eine schematische Darstellung eines zweiten Ausführungsbeispiels eines erfindungsgemäßen Türüberwachungssensors;
- Fig. 3: eine schematische Perspektivdarstellung eines erfindungsgemäßen Türüberwachungssensors und
- Fig. 4: eine schematische Darstellung einer Karusselltür und eines Überwachungsraums.

Äquivalente Komponenten sind in allen Figuren mit denselben Bezugszeichen gekennzeichnet.

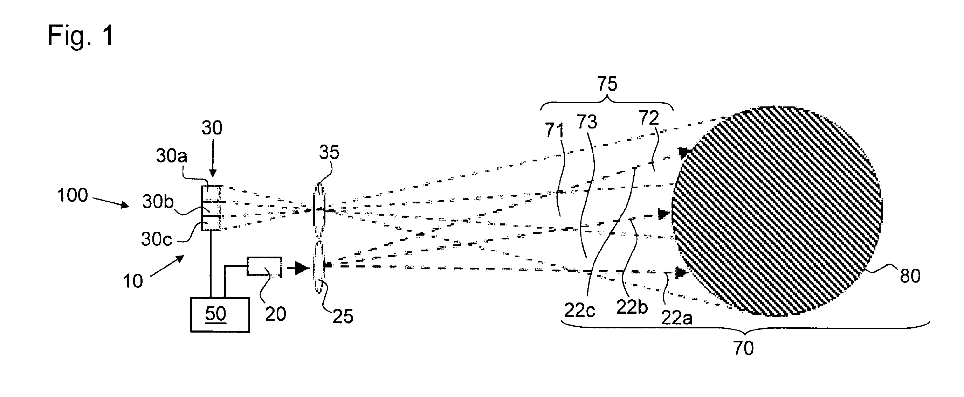

Fig. 1 zeigt schematisch ein erstes Ausführungsbeispiel eines erfindungsgemäßen Türüberwachungssensors 100. Dieser weist eine Sender-Empfänger-Einrichtung 10 auf, welche mit einem Lichtsender 20 Messlichtstrahlen 22a bis 22c in einen Überwachungsraum 70 sendet und mit einem Lichtdetektor 30 aus dem Überwachungsraum 70 zurückgestrahlte Messlichtstrahlen nachweist.

Der Türüberwachungssensor 100 weist weiterhin eine Steuer- und Auswerteeinrichtung 50 auf. Diese erzeugt aus den Intensitäten von Messlichtstrahlen, die der Lichtdetektor 30 nachweist, Messsignale. Abhängig davon, ob die Messsignale einen vorgegebenen Schwellwert überschreiten, gibt die Steuer- und Auswerteeinrichtung 50 ein Objektfeststellungssignal aus.

In dem dargestellten Ausführungsbeispiel umfasst der Lichtsender 20 genau ein Senderelement 20 zum Aussenden von Messlichtstrahlen 22a bis 22c. Mit einer Sendeoptik 25 werden die Messlichtstrahlen 22a bis 22c des Senderelements 20 aufgefächert und flächig in einen Überwachungsbereich 75 des Überwachungsraums 70 gesendet. Bevorzugt beleuchten die Messlichtstrahlen 22a bis 22c einen zusammenhängenden Bereich des Überwachungsraums 70. Alternativ kann aber auch eine Blende vorhanden sein, durch welche die Messlichtstrahlen 22a bis 22c drei voneinander getrennte Bereiche des Überwachungsraums 70 beleuchten.

Der mittlere Messlichtstrahl 22b wird in eine mittlere Zone 71 des Überwachungsbereichs 75 gesendet, während die seitlichen Messlichtstrahlen 22a, 22c in seitliche Zonen 72, 73 des Überwachungsraums 70 gesendet werden. Dabei sind die mittlere und die seitlichen Zonen 71 bis 73 in einer Richtung quer zur Aussenderichtung der Messlichtstrahlen 22a bis 22c benachbart zueinander.

Die Messlichtstrahlen 22a bis 22c werden von der Sendeoptik 25 soweit aufgefächert, dass sie noch vollständig auf ein typischerweise nachzuweisendes Objekt 80 im Überwachungsraum 70 treffen. Hierzu kann der Durchmesser einer durch die Messlichtstrahlen 22a bis 22c beleuchteten Fläche im Überwachungsraum 70 zwischen 1 cm und 10 cm, bevorzugt zwischen 3 cm und 5 cm, betragen. Typischerweise nachzuweisenden Objekte mit einem Durchmesser von etwa 5 cm werden dann weitestgehend über ihre gesamte Wölbung beleuchtet.

In dem abgebildeten Beispiel befindet sich ein Objekt 80 im Überwachungsraum 70 und wird deshalb von jedem der ausgesandten Messlichtstrahlen 22a bis 22c getroffen. Diese treffen an drei separaten Auftreffpunkten auf das Objekt 80. Besonders sicher können mit dem erfindungsgemäßen Türüberwachungssensor 100 rundliche Objekte 80 nachgewiesen werden. Durch die Rundung werden die drei Auftreffpunkte unterschiedlich stark beleuchtet. Der mittlere Messlichtstrahl 22b trifft ungefähr senkrecht auf die Oberfläche des Objekts 80, wodurch ein großer Anteil des Lichts in Richtung der Sender-Empfänger-Einrichtung 10 zurückgeworfen wird. Die seitlichen Messlichtstrahlen 22a und 22c treffen hingegen schräger auf die Objektoberfläche auf, so dass weniger Licht in Richtung der Sender-Empfänger-Einrichtung zurückgestrahlt wird.

Von dem Objekt 80 zurückgeworfene Messlichtstrahlen werden von dem Lichtdetektor 30 nachgewiesen, welcher mehrere Empfangselemente, im dargestellten Beispiel drei Empfangselemente 30a bis 30c, aufweist. Mit Hilfe einer Empfangsoptik 35 werden aus der mittleren Zone 71 kommende Messlichtstrahlen allein auf das mittlere Empfangselement 30b geleitet. Aus der ersten seitlichen Zone 72 kommende Messlichtstrahlen gelangen hingegen auf das Empfangselement 30c und aus der zweiten seitlichen Zone 73 kommende Messlichtstrahlen ausschließlich auf das Empfangselement 30a.

Wegen der runden Form des Objekts 80 misst das Empfangselement 30b die höchste Lichtintensität. Die Steuer- und Auswerteeinrichtung 50 bestimmt nun die Differenz zwischen der nachgewiesenen Messlichtintensität des mittleren Empfangselements 30b und den nachgewiesenen Messlichtintensitäten der beiden seitlichen Empfangselemente 30a, 30c. Diese Differenz wird mit einem Schwellwert verglichen. Bei einem Überschreiten des Schwellwerts gibt die Steuer- und Auswerteeinrichtung 50 ein Objektfeststellungssignal aus.

Zusätzlich oder alternativ können die nachgewiesenen Messlichtintensitäten der verschiedenen Empfangselemente jeweils mit einem Schwellwert verglichen werden. Bei einer bestimmten Entfernung des Objekts kann es zwar vorkommen, dass ein Empfangselement die gleiche Messlichtintensität misst, die auch vom Untergrund erwartet wird. Bei einer rundlichen Objektform weist jedoch mindestens eines der Empfangselemente eine andere Messlichtintensität auf. Auch in dieser Weise kann somit ein rundliches Objekt sicher vom Untergrund unterschieden werden.

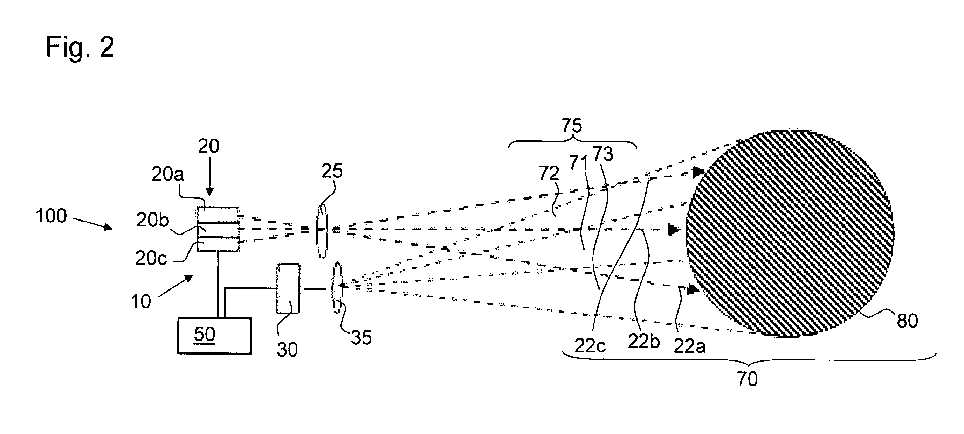

Fig. 2 zeigt eine schematische Darstellung eines zweiten Ausführungsbeispiels eines erfindungsgemäßen Türüberwachungssensors 100. Diese Ausführung unterscheidet sich von dem ersten Ausführungsbeispiel durch die Ausgestaltung des Lichtsenders 20 und des Lichtdetektors 30. In der in Fig. 2 dargestellten Ausführung umfasst der Lichtdetektor 30 ein einziges Empfangselement 30, während der Lichtsender 20 mehrere Senderelemente, im dargestellten Fall drei Senderelemente 20a bis 20c, aufweist.

Der Lichtdetektor 30 weist aus dem Überwachungsbereich 75 kommende Messlichtstrahlen nach. Hierbei spielt es keine Rolle, ob die Messlichtstrahlen aus der mittleren Zone 71, der ersten seitlichen Zone 72 oder der zweiten seitlichen Zone 73 des Überwachungsbereichs 75 kommen. Um dennoch nachgewiesene Messlichtstrahlen den einzelnen Zonen zuordnen zu können, werden die Senderelemente 20a bis 20c des Lichtsenders 20 nacheinander eingeschaltet. Zu jedem Zeitpunkt ist daher nur eines der Senderelemente 20a bis 20c aktiv. Mit Hilfe der Sendeoptik 25 wird ein Messlichtstrahl 22b des mittleren Senderelements 20b in die mittlere Zone 71 gesendet, während die Messlichtstrahlen 22a und 22c der beiden seitlichen Senderelemente 20a und 20c jeweils in eine der beiden seitlichen Zonen 72 und 73 des Überwachungsbereichs 75 gesendet werden.

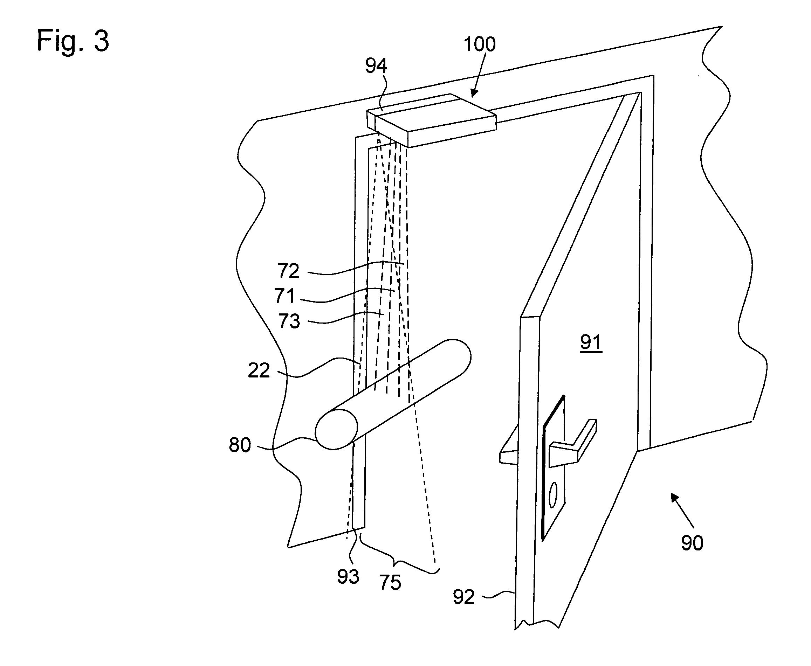

In Fig. 3 ist eine Perspektivdarstellung eines erfindungsgemäßen Türüberwachungssensors 100 gezeigt. Dieser ist mit Montagemitteln 94 oberhalb einer Tür 90 angebracht. Mögliche Türarten umfassen nicht nur die dargestellte Anschlagtür 90, sondern insbesondere auch Karusselltüren.

Ein Überwachungsbereich 75 zwischen der Hauptschließkante 92 des Türblatts 91 der Tür 90 und der Gegenschließkante 93 des Türrahmens der Tür 90 soll überwacht werden. Hierzu weist der Türüberwachungssensor 100 eine Sender-Empfänger-Einrichtung auf (nicht dargestellt), welche einen Messlichtstrahl 22 in den Überwachungsbereich 75 aussendet. Die Sender- und Empfängereinrichtung weist mehrere Empfangselemente auf, die aus unterschiedlichen Zonen 71 bis 73 zurückgeworfenes Messlicht getrennt nachweisen.

Im abgebildeten Beispiel befindet sich ein Objekt 80 im Überwachungsbereich 75. Das Objekt 80 weist eine gewölbte oder gebogene Form auf. Beispielsweise kann es sich bei dem Objekt 80 um einen menschlichen Arm handeln. Wegen der gebogenen Form ist der Einfallswinkel des Messlichts 22 in der mittleren Zone 71 kleiner als die Einfallswinkel in den seitlichen Zonen 72 und 73. Dabei kann der Einfallswinkel als Betrag des Winkels zwischen einer Ausbreitungsrichtung des Messlichts und einer Normalen auf die Objektoberfläche verstanden werden. Der Einfallswinkel beeinflusst die Messlichtintensität, die zur Sender-Empfänger-Einrichtung zurückgestrahlt wird.

Die gebogene Form führt also dazu, dass die Empfangselemente unterschiedliche Messlichtintensitäten empfangen. Vorteilhafterweise kann somit ein gebogenes oder gewölbtes Objekt 80 an jeder beliebigen Position im Überwachungsbereich 75 sicher nachgewiesen werden.

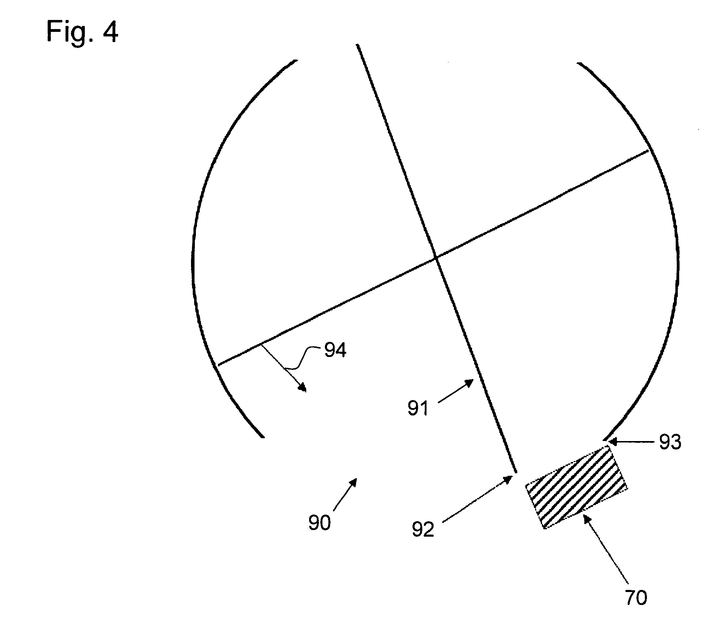

Bevorzugt wird der erfindungsgemäße Türüberwachungssensor an einer Karusselltür eingesetzt. Eine solche ist in Figur 4 schematisch von oben gezeigt. Die Karusselltür 90 weist mehrere Türblätter 91 auf, die sich um eine gemeinsame Drehachse in Richtung des Pfeils 94 drehen können. Der Bereich zwischen einer Hauptschließkante 92 eines Türblatts 91 der Karusselltür 90 und einer Gegenschließkante 93 eines Rahmens stellt einen Gefahrenbereich dar und soll überwacht werden. Hierzu ist der erfindungsgemäße Türüberwachungssensor nicht-mitfahrend im Bereich der Gegenschließkante 93 des Rahmens montiert. Dadurch wird ein Überwachungsraum 70 gebildet, welcher sich im Bereich der Gegenschließkante 93 befindet oder direkt an diese angrenzt.

Mit dem Türüberwachungssensor und dem Verfahren gemäß der Erfindung ist eine sichere Erkennung eines Objekts vorteilhafterweise mit einfachen Mitteln und somit kostengünstig möglich.

## Patentansprüche

1. Türüberwachungssensor zum Überwachen der Gegenschließkante (93) einer Tür (90),
mit einer Sender-Empfänger-Einrichtung (10), welche einen Lichtsender (20) zum Aussenden von mindestens einem Messlichtstrahl (22a bis 22c) in einen Überwachungsraum (70) im Bereich der Gegenschließkante (93) der Tür (90) und einen Lichtdetektor (30) mit mindestens einem Empfangselement (30a) zum Nachweisen von aus dem Überwachungsraum (70) zurückgeworfenen Messlichtstrahlen aufweist, und
mit einer Steuer- und Auswerteeinrichtung (50), die dazu eingerichtet ist, abhängig von Messsignalen, die aus den nachgewiesenen Messlichtstrahlen erzeugt werden, ein Objektfeststellungssignal auszugeben,
**dadurch gekennzeichnet,**
**dass** die Sender-Empfänger-Einrichtung (10) dazu eingerichtet ist, Messlichtstrahlen in einen flächigen, insbesondere fächerartigen, Überwachungsbereich (75) des Überwachungsraums (70) zu senden, wobei der flächige Überwachungsbereich (75) mindestens eine mittlere Zone (71), mindestens eine erste seitliche Zone (72) und mindestens eine zweite seitliche Zone (73) aufweist und sich die erste und die zweite seitliche Zone (72, 73) in einer Richtung quer zu einer Ausbreitungsrichtung der ausgesandten Messlichtstrahlen auf gegenüberliegenden Seiten der mittleren Zone (71) befinden,
**dass** die Sender-Empfänger-Einrichtung (10) dazu eingerichtet ist, Messlichtstrahlen von jeweils unterschiedlichen beleuchteten Punkten auf einem nachzuweisenden Objekt aus der mittleren Zone (71) und der ersten und zweiten seitlichen Zone (72, 73) des Überwachungsbereichs (75) getrennt voneinander nachzuweisen,
**dass** die Steuer- und Auswerteeinrichtung (50) dazu eingerichtet ist,
- aus Intensitäten der nachgewiesenen Messlichtstrahlen aus der mittleren Zone (71), der ersten seitlichen Zone (72) und der zweiten seitlichen Zone (73) jeweils ein Messsignal zu erzeugen,
- die Messsignale mit mindestens einem Schwellwert zu vergleichen und
- abhängig von einem Ergebnis dieser Vergleiche ein Objektfeststellungssignal auszugeben, und
**dass** der Lichtdetektor (30) mindestens ein mittleres Empfangselement (30b) und zwei seitliche Empfangselemente (30a, 30c) aufweist, welche so angeordnet sind, dass ein aus der mittleren Zone (71) kommender Messlichtstrahl auf das mittlere Empfangselement (30b) trifft und aus den zwei seitlichen Zonen (72, 73) kommende Messlichtstrahlen auf die zwei seitlichen Empfangselemente (30a, 30c) treffen,
wobei eine Empfangsoptik (35) zum Leiten eines Messlichtstrahls aus der mittleren Zone (71) auf das mittlere Empfangselement (30b), zum Leiten eines Messlichtstrahls aus der ersten seitlichen Zone (72) auf das erste seitliche Empfangselement (30a) und zum Leiten eines Messlichtstrahls aus der zweiten seitlichen Zone (73) auf das zweite seitliche Empfangselement (30c) vorhanden ist.

2. Türüberwachungssensor nach Anspruch 1,
**dadurch gekennzeichnet,**
**dass** der Lichtsender (20) genau ein Senderelement (20a) zum Aussenden von einem Messlichtstrahl in sowohl die mittlere Zone (71) als auch die erste und zweite seitliche Zone (72, 73) aufweist.

3. Türüberwachungssensor nach Anspruch 1 oder 2,
**dadurch gekennzeichnet,**
**dass** zwischen der Empfangsoptik (35) und dem Lichtdetektor (30) eine Blende vorhanden ist, welche zum Erzeugen von Blindbereichen zwischen der mittleren und den zwei seitlichen Zonen (71, 72, 73) jeweils eine Fläche zwischen zwei benachbarten Empfangselementen (30a, 30b, 30c) abdeckt.

4. Türüberwachungssensor zum Überwachen der Gegenschließkante (93) einer Tür (90),
mit einer Sender-Empfänger-Einrichtung (10), welche einen Lichtsender (20) zum Aussenden von mindestens einem Messlichtstrahl (22a bis 22c) in einen Überwachungsraum (70) im Bereich der Gegenschließkante (93) der Tür (90) und einen Lichtdetektor (30) mit mindestens einem Empfangselement (30a) zum Nachweisen von aus dem Überwachungsraum (70) zurückgeworfenen Messlichtstrahlen aufweist, und
mit einer Steuer- und Auswerteeinrichtung (50), die dazu eingerichtet ist, abhängig von Messsignalen, die aus den nachgewiesenen Messlichtstrahlen erzeugt werden, ein Objektfeststellungssignal auszugeben,
**dadurch gekennzeichnet,**
**dass** die Sender-Empfänger-Einrichtung (10) dazu eingerichtet ist, Messlichtstrahlen in einen flächigen, insbesondere fächerartigen, Überwachungsbereich (75) des Überwachungsraums (70) zu senden, wobei der flächige Überwachungsbereich (75) mindestens eine mittlere Zone (71), mindestens eine erste seitliche Zone (72) und mindestens eine zweite seitliche Zone (73) aufweist und sich die erste und die zweite seitliche Zone (72, 73) in einer Richtung quer zu einer Ausbreitungsrichtung der ausgesandten Messlichtstrahlen auf gegenüberliegenden Seiten der mittleren Zone (71) befinden,
**dass** die Sender-Empfänger-Einrichtung (10) dazu eingerichtet ist, Messlichtstrahlen von jeweils unterschiedlichen beleuchteten Punkten auf einem nachzuweisenden Objekt aus der mittleren Zone (71) und der ersten und zweiten seitlichen Zone (72, 73) des Überwachungsbereichs (75) getrennt voneinander nachzuweisen,
**dass** die Steuer- und Auswerteeinrichtung (50) dazu eingerichtet ist,
- aus Intensitäten der nachgewiesenen Messlichtstrahlen aus der mittleren Zone (71), der ersten seitlichen Zone (72) und der zweiten seitlichen Zone (73) jeweils ein Messsignal zu erzeugen,
- die Messsignale mit mindestens einem Schwellwert zu vergleichen und
- abhängig von einem Ergebnis dieser Vergleiche ein Objektfeststellungssignal auszugeben,
**dass** der Lichtsender (20) mindestens drei Senderelemente (20a, 20b, 20c) aufweist, von denen ein mittleres Senderelement (20b) einen Messlichtstrahl (22b) in die mittlere Zone (71) aussendet und zwei seitliche Senderelemente (20a, 20c) Messlichtstrahlen (22a, 22c) in die zwei seitlichen Zonen (72, 73) aussenden,
**dass** die Steuer- und Auswerteeinrichtung (50) dazu eingerichtet ist, die mindestens drei Senderelemente (20a, 20b, 20c) zum sequentiellen Aussenden der Messlichtstrahlen (22a, 22b, 22c) anzusteuern, und
**dass** der Lichtdetektor (30) mindestens ein Empfangselement (30a), insbesondere genau ein Empfangselement (30a), aufweist, welches so angeordnet ist, dass sowohl aus der mittleren Zone (71) als auch aus den zwei seitlichen Zonen (72, 73) kommende Messlichtstrahlen auf das Empfangselement (30a) auftreffen.

5. Türüberwachungssensor nach einem der Ansprüche 1 bis 4,
**dadurch gekennzeichnet,**
**dass** zum aufgefächerten Aussenden der Messlichtstrahlen in die mittlere und die zwei seitlichen Zonen (71, 72, 73) mindestens eine Sendeoptik (25) vorhanden ist.

6. Verfahren zum Überwachen der Gegenschließkante (93) einer Tür (90), insbesondere einer Karusselltür (90),
bei dem mit einer Sender-Empfänger-Einrichtung (10) mindestens ein Messlichtstrahl (22a bis 22c) in einen Überwachungsraum (70) im Bereich der Gegenschließkante (93) der Tür (90) gesendet wird und aus dem Überwachungsraum (70) zurückgeworfene Messlichtstrahlen nachgewiesen werden,
bei dem abhängig von Messsignalen, die aus den nachgewiesenen Messlichtstrahlen erzeugt werden, ein Objektfeststellungssignal ausgegeben wird,
**dadurch gekennzeichnet,**
**dass** die Sender-Empfänger-Einrichtung (10) Messlichtstrahlen in einen flächigen, insbesondere fächerartigen, Überwachungsbereich (75) des Überwachungsraums (70) sendet, wobei der flächige Überwachungsbereich (75) mindestens eine mittlere Zone (71), mindestens eine erste seitliche Zone (72) und mindestens eine zweite seitliche Zone (73) aufweist und die erste und die zweite seitliche Zone (72, 73) sich in einer Richtung quer zu einer Ausbreitungsrichtung der ausgesandten Messlichtstrahlen auf gegenüberliegenden Seiten der mittleren Zone (71) befinden,
**dass** mit der Sender-Empfänger-Einrichtung (10) Messlichtstrahlen von jeweils unterschiedlichen beleuchteten Punkten auf einem nachzuweisenden Objekt aus der mittleren Zone (71) und der ersten und zweiten seitlichen Zone (72, 73) des Überwachungsbereichs (75) getrennt voneinander nachgewiesen werden und
**dass** aus Intensitäten der nachgewiesenen Messlichtstrahlen aus der mittleren Zone (71), der ersten seitlichen Zone (72) und der zweiten seitlichen Zone (73) jeweils ein Messsignal erzeugt wird, die Messsignale mit mindestens einem Schwellwert verglichen werden und abhängig von einem Ergebnis dieser Vergleiche ein Objektfeststellungssignal ausgegeben wird und
**dass** die Sende-Empfänger-Einrichtung (10) einen Lichtdetektor (30) mit mindestens einem mittlerem Empfangselement (30b) und zwei seitlichen Empfangselementen (30a, 30c) aufweist, welche so angeordnet sind, dass ein aus der mittleren Zone (71) kommender Messlichtstrahl auf das mittlere Empfangselement (30b) trifft und aus den zwei seitlichen Zonen (72, 73) kommende Messlichtstrahlen auf die zwei seitlichen Empfangselemente (30a, 30c) treffen,
wobei eine Empfangsoptik (35) zum Leiten eines Messlichtstrahls aus der mittleren Zone (71) auf das mittlere Empfangselement (30b), zum Leiten eines Messlichtstrahls aus der ersten seitlichen Zone (72) auf das erste seitliche Empfangselement (30a) und zum Leiten eines Messlichtstrahls aus der zweiten seitlichen Zone (73) auf das zweite seitliche Empfangselement (30c) vorhanden ist.

7. Verfahren zum Überwachen der Gegenschließkante (93) einer Tür (90), insbesondere einer Karusselltür (90),
bei dem mit einer Sender-Empfänger-Einrichtung (10) mindestens ein Messlichtstrahl (22a bis 22c) in einen Überwachungsraum (70) im Bereich der Gegenschließkante (93) der Tür (90) gesendet wird und aus dem Überwachungsraum (70) zurückgeworfene Messlichtstrahlen nachgewiesen werden,
bei dem abhängig von Messsignalen, die aus den nachgewiesenen Messlichtstrahlen erzeugt werden, ein Objektfeststellungssignal ausgegeben wird,
**dadurch gekennzeichnet,**
**dass** die Sender-Empfänger-Einrichtung (10) Messlichtstrahlen in einen flächigen, insbesondere fächerartigen, Überwachungsbereich (75) des Überwachungsraums (70) sendet, wobei der flächige Überwachungsbereich (75) mindestens eine mittlere Zone (71), mindestens eine erste seitliche Zone (72) und mindestens eine zweite seitliche Zone (73) aufweist und die erste und die zweite seitliche Zone (72, 73) sich in einer Richtung quer zu einer Ausbreitungsrichtung der ausgesandten Messlichtstrahlen auf gegenüberliegenden Seiten der mittleren Zone (71) befinden,
**dass** mit der Sender-Empfänger-Einrichtung (10) Messlichtstrahlen von jeweils unterschiedlichen beleuchteten Punkten auf einem nachzuweisenden Objekt aus der mittleren Zone (71) und der ersten und zweiten seitlichen Zone (72, 73) des Überwachungsbereichs (75) getrennt voneinander nachgewiesen werden,
**dass** aus Intensitäten der nachgewiesenen Messlichtstrahlen aus der mittleren Zone (71), der ersten seitlichen Zone (72) und der zweiten seitlichen Zone (73) jeweils ein Messsignal erzeugt wird, die Messsignale mit mindestens einem Schwellwert verglichen werden und abhängig von einem Ergebnis dieser Vergleiche ein Objektfeststellungssignal ausgegeben wird,
**dass** die Sende-Empfänger-Einrichtung (10) einen Lichtsender (20) mit mindestens drei Senderelementen (20a, 20b, 20c) aufweist, von denen ein mittleres Senderelement (20b) einen Messlichtstrahl (22b) in die mittlere Zone (71) aussendet und zwei seitliche Senderelemente (20a, 20c) Messlichtstrahlen (22a, 22c) in die zwei seitlichen Zonen (72, 73) aussenden,
**dass** die mindestens drei Senderelemente (20a, 20b, 20c) zum sequentiellen Aussenden der Messlichtstrahlen (22a, 22b, 22c) angesteuert werden und dass die Sende-Empfänger-Einrichtung (10) einen Lichtdetektor (30) mit mindestens einem Empfangselement (30a), insbesondere genau einem Empfangselement (30a), aufweist, welches so angeordnet ist, dass sowohl aus der mittleren Zone (71) als auch aus den zwei seitlichen Zonen (72, 73) kommende Messlichtstrahlen auf das Empfangselement (30a) auftreffen.

8. Verfahren nach Anspruch 6 oder 7,
**dadurch gekennzeichnet,**
**dass** ein Objektfeststellungssignal ausgegeben wird, wenn die Intensität des nachgewiesenen Messlichtstrahls aus der mittleren Zone (71) die Intensitäten der nachgewiesenen Messlichtstrahlen aus der ersten und der zweiten seitlichen Zone (72, 73) jeweils um einen vorgegebenen Schwellwert überschreitet.

9. Verfahren nach einem der Ansprüche 6 bis 8,
**dadurch gekennzeichnet,**
**dass** der Türüberwachungssensor am Einsatzort dergestalt montiert wird, dass eine durch den flächigen Überwachungsbereich (75) definierte Fläche in Richtung der zu überwachenden Gegenschließkante (93) und quer zu einer Fläche des Türblatts (91) der Tür (90) ausgerichtet ist.

## Claims

1. Door monitoring sensor for monitoring the counter closing edge (93) of a door (90),
having a transmitter-receiver unit (10) which has a light transmitter (20) for emitting at least one measuring light beam (22a to 22c) into a monitoring space (70) in the region of the counter closing edge (93) of the door (90) and also has a light detector (30) having at least one receiving element (30a) for detecting measuring light beams reflected from the monitoring space (70), and
having a control and evaluation unit (50) which is adapted, in dependence upon measuring signals generated from the detected measuring light beams, to output an object detection signal,
**characterised in that**
the transmitter-receiver unit (10) is adapted to transmit measuring light beams into a flat, in particular fan-like, monitoring region (75) of the monitoring space (70), wherein the flat monitoring region (75) has at least a middle zone (71), at least a first lateral zone (72) and at least a second lateral zone (73), and the first and the second lateral zone (72, 73) are located in a direction transverse to a propagation direction of the emitted measuring light beams on opposite sides of the middle zone (71),
the transmitter-receiver unit (10) is adapted to detect measuring light beams from respectively different illuminated points on an object to be detected from the middle zone (71) and the first and the second lateral zone (72, 73) of the monitoring region (75) separately from one another,
the control and evaluation unit (50) is adapted
- to generate a respective measuring signal from intensities of the detected measuring light beams from the middle zone (71), the first lateral zone (72) and the second lateral zone (73),
- to compare the measuring signals with at least one threshold value and
- to output an object detection signal in dependence upon a result of these comparisons, and
the light detector (30) has at least one middle receiving element (30b) and two lateral receiving elements (30a, 30c) which are arranged so that a measuring light beam coming from the middle zone (71) hits the middle receiving element (30b) and measuring light beams coming from the two lateral zones (72, 73) hit the two lateral receiving elements (30a, 30c),
wherein a receiving optical system (35) is present to guide a measuring light beam from the middle zone (71) onto the middle receiving element (30b), to guide a measuring light beam from the first lateral zone (72) onto the first lateral receiving element (30a) and to guide a measuring light beam from the second lateral zone (73) onto the second lateral receiving element (30c).

2. Door monitoring sensor according to claim 1,
**characterised in that**
the light transmitter (20) has precisely one transmitter element (20a) for emitting a measuring light beam into both the middle zone (71) and also the first and the second lateral zone (72, 73).

3. Door monitoring sensor according to claim 1 or 2,
**characterised in that**
a diaphragm is present between the receiving optical system (35) and the light detector (30) and covers a respective area between two adjacent receiving elements (30a, 30b, 30c) to produce blind regions between the middle and the two lateral zones (71, 72, 73).

4. Door monitoring sensor for monitoring the counter closing edge (93) of a door (90),
having a transmitter-receiver unit (10) which has a light transmitter (20) for emitting at least one measuring light beam (22a to 22c) into a monitoring space (70) in the region of the counter closing edge (93) of the door (90) and has a light detector (30) having at least one receiving element (30a) for detecting measuring light beams reflected from the monitoring space (70), and
having a control and evaluation unit (50) which is adapted, in dependence upon measuring signals generated from the detected measuring light beams, to output an object detection signal,
**characterised in that**
the transmitter-receiver unit (10) is adapted to transmit measuring light beams into a flat, in particular fan-like, monitoring region (75) of the monitoring space (70), wherein the flat monitoring region (75) has at least a middle zone (71), at least a first lateral zone (72) and at least a second lateral zone (73), and the first and the second lateral zone (72, 73) are located in a direction transverse to a propagation direction of the emitted measuring light beams on opposite sides of the middle zone (71),
the transmitter-receiver unit (10) is adapted to detect measuring light beams from respectively different illuminated points on an object to be detected from the middle zone (71) and from the first and the second lateral zone (72, 73) of the monitoring region (75) separately from one other,
the control and evaluation unit (50) is adapted
- to generate a respective measuring signal from intensities of the detected measuring light beams from the middle zone (71), the first lateral zone (72) and the second lateral zone (73),
- to compare the measuring signals with at least one threshold value and
- to output an object detection signal in dependence upon a result of these comparisons,
the light transmitter (20) has at least three transmitter elements (20a, 20b, 20c), of which a middle transmitter element (20b) emits a measuring light beam (22b) into the middle zone (71) and two lateral transmitter elements (20a, 20c) emit measuring light beams (22a, 22c) into the two lateral zones (72, 73),
the control and evaluation unit (50) is adapted to control the at least three transmitter elements (20a, 20b, 20c) for sequential emission of the measuring light beams (22a, 22b, 22c), and
the light detector (30) has at least one receiving element (30a), in particular precisely one receiving element (30a), which is arranged so that measuring light beams coming both from the middle zone (71) and also from the two lateral zones (72, 73) hit the receiving element (30a).

5. Door monitoring sensor according to one of the claims 1 to 4,
**characterised in that**
at least one transmission optical system (25) is present for fanned-out emission of the measuring light beams into the middle and the two lateral zones (71, 72, 73).

6. Method for monitoring the counter closing edge (93) of a door (90), in particular a revolving door (90),
wherein, with a transmitter-receiver unit (10), at least one measuring light beam (22a to 22c) is transmitted into a monitoring space (70) in the region of the counter closing edge (93) of the door (90) and measuring light beams reflected from the monitoring space (70) are detected,
wherein, in dependence upon measuring signals which are generated from the detected measuring light beams, an object detection signal is output,
**characterised in that**
the transmitter-receiver unit (10) transmits measuring light beams into a flat, in particular fan-like, monitoring region (75) of the monitoring space (70), wherein the flat monitoring region (75) has at least a middle zone (71), at least a first lateral zone (72) and at least a second lateral zone (73), and the first and the second lateral zone (72, 73) are located in a direction transverse to a propagation direction of the emitted measuring light beams on opposite sides of the middle zone (71),
measuring light beams from respectively different illuminated points on an object to be detected are detected with the transmitter-receiver unit (10) from the middle zone (71) and the first and the second lateral zone (72, 73) of the monitoring region (75) separately from one another, and
a respective measuring signal is generated from intensities of the detected measuring light beams from the middle zone (71), the first lateral zone (72) and the second lateral zone (73), the measuring signals are compared with at least one threshold value and an object detection signal is output in dependence upon a result of these comparisons, and
the transmitter-receiver unit (10) has a light detector (30) having at least one middle receiving element (30b) and two lateral receiving elements (30a, 30c) which are arranged so that a measuring light beam coming from the middle zone (71) hits the middle receiving element (30b) and measuring light beams coming from the two lateral zones (72, 73) hit the two lateral receiving elements (30a, 30c),
wherein a receiving optical system (35) is present to guide a measuring light beam from the middle zone (71) onto the middle receiving element (30b), to guide a measuring light beam from the first lateral zone (72) onto the first lateral receiving element (30a) and to guide a measuring light beam from the second lateral zone (73) onto the second lateral receiving element (30c).

7. Method for monitoring the counter closing edge (93) of a door (90), in particular a revolving door (90),
wherein, with a transmitter-receiver unit (10), at least one measuring light beam (22a to 22c) is transmitted into a monitoring space (70) in the region of the counter closing edge (93) of the door (90) and measuring light beams reflected from the monitoring space (70) are detected,
wherein, in dependence upon measuring signals which are generated from the detected measuring light beams, an object detection signal is output,
**characterised in that**
the transmitter-receiver unit (10) transmits measuring light beams into a flat, in particular fan-like, monitoring region (75) of the monitoring space (70), wherein the flat monitoring region (75) has at least a middle zone (71), at least a first lateral zone (72) and at least a second lateral zone (73), and the first and the second lateral zone (72, 73) are located in a direction transverse to a propagation direction of the emitted measuring light beams on opposite sides of the middle zone (71),
measuring light beams from respectively different illuminated points on an object to be detected are detected with the transmitter-receiver unit (10) from the middle zone (71) and the first and the second lateral zone (72, 73) of the monitoring region (75) separately from one another,
a respective measuring signal is generated from intensities of the detected measuring light beams from the middle zone (71), the first lateral zone (72) and the second lateral zone (73), the measuring signals are compared with at least one threshold value and an object detection signal is output in dependence upon a result of these comparisons,
the transmitter-receiver unit (10) has a light transmitter (20) having at least three transmitter elements (20a, 20b, 20c), of which a middle transmitter element (20b) emits a measuring light beam (22b) into the middle zone (71) and two lateral transmitter elements (20a, 20c) emit measuring light beams (22a, 22c) into the two lateral zones (72, 73),
the at least three transmitter elements (20a, 20b, 20c) are controlled for sequential emission of the measuring light beams (22a, 22b, 22c), and
the transmitter-receiver unit (10) has a light detector (30) having at least one receiving element (30a), in particular precisely one receiving element (30a), which is arranged so that measuring light beams coming both from the middle zone (71) and also from the two lateral zones (72, 73) hit the receiving element (30a).

8. Method according to claim 6 or 7,
**characterised in that**
an object detection signal is output if the intensity of the detected measuring light beam from the middle zone (71) exceeds the intensities of the detected measuring light beams from the first and the second lateral zone (72, 73) in each case by a predefined threshold value.

9. Method according to one of the claims 6 to 8,
**characterised in that**
the door monitoring sensor is mounted at the place of use in such a way that an area defined by the flat monitoring region (75) is orientated in the direction of the counter closing edge (93) to be monitored and transverse to an area of the door leaf (91) of the door (90).

## Revendications

1. Capteur de surveillance de porte pour la surveillance de la contre-arête de fermeture (93) d'une porte (90),
avec un dispositif d'émission-réception (10), qui comprend un émetteur de lumière (20), pour l'émission d'au moins un rayon lumineux de mesure (22a à 22c) dans un espace de surveillance (70) dans la zone de la contre-arête de fermeture (93) de la porte (90), et un détecteur de lumière (30) avec au moins un élément de réception (30a) pour la détection de rayons lumineux de mesure de retour provenant de l'espace de surveillance (70), et
avec un dispositif de commande et d'évaluation (50), qui est agencé pour délivrer un signal d'identification d'objet en fonction de signaux de mesure qui sont produits à partir des rayons lumineux de mesure détectés,
**caractérisé :**
**en ce que** le dispositif d'émission-réception (10) est agencé pour émettre des rayons lumineux de mesure dans une zone de surveillance (75) de l'espace de surveillance (70), du type surface plane, qui est plus particulièrement en forme d'éventail, la zone de surveillance (75) du type surface plane comprenant au moins une zone médiane (71), au moins une première zone latérale (72) et au moins une deuxième zone latérale (73) et les première et deuxième zones latérales (72, 73) étant situées dans une direction transversale à une direction de propagation des rayons lumineux de mesure émis sur des côtés opposés de la zone médiane (71),
**en ce que** le dispositif d'émission-réception (10) est agencé pour détecter de manière séparée les uns des autres des rayons lumineux de mesure provenant de points éclairés différents sur un objet à détecter de la zone médiane (71) et des première et deuxième zones latérales (72, 73) de la zone de surveillance (75),
**en ce que** le dispositif de commande et d'évaluation (50) est agencé :
- pour générer, à partir des intensités des rayons lumineux de mesure détectés en provenance de la zone médiane (71), de la première zone latérale (72) et de la deuxième zone latérale (73), à chaque fois un signal de mesure,
- pour comparer les signaux de mesure à au moins une valeur de seuil, et
- pour délivrer en fonction d'un résultat de ces comparaisons un signal d'identification d'objet, et
**en ce que** le détecteur de lumière (30) comprend au moins un élément de réception médian (30b) et deux éléments de réception latéraux (30a, 30c), qui sont disposés de telle sorte qu'un rayon lumineux de mesure venant de la zone médiane (71) atteint l'élément de réception médian (30b) et que des rayons lumineux de mesure venant des deux zones latérales (72, 73) atteignent les deux éléments de réception latéraux (30a, 30c),
une optique de réception (35) étant présente pour conduire un rayon lumineux de mesure provenant de la zone médiane (71) sur l'élément de réception médian (30b), pour conduire un rayon lumineux de mesure provenant de la première zone latérale (72) sur le premier élément de réception latéral (30a) et pour conduire un rayon lumineux de mesure provenant de la deuxième zone latérale (73) sur le deuxième élément de réception latéral (30c).

2. Capteur de surveillance de porte selon la revendication 1,
**caractérisé :**
**en ce que** l'émetteur de lumière (20) comprend exactement un élément d'émission (20a) pour l'émission d'un rayon lumineux de mesure aussi bien dans la zone médiane (71) qu'également les première et deuxième zones latérales (72, 73).

3. Capteur de surveillance de porte selon la revendication 1 ou 2,
**caractérisé :**
**en ce que**, entre l'optique de réception (35) et le détecteur de lumière (30), un écran est présent, qui, pour la production de zones aveugles entre la zone médiane et les deux zones latérales (71, 72, 73), couvre à chaque fois une surface entre deux éléments de réception voisins (30a, 30b, 30c).

4. Capteur de surveillance de porte pour la surveillance de la contre-arête de fermeture (93) d'une porte (90),
avec un dispositif d'émission-réception (10), qui comprend un émetteur de lumière (20), pour l'émission d'au moins un rayon lumineux de mesure (22a à 22c) dans un espace de surveillance (70) dans la zone de la contre-arête de fermeture (93) de la porte (90), et un détecteur de lumière (30) avec au moins un élément de réception (30a) pour la détection de rayons lumineux de mesure de retour provenant de l'espace de surveillance (70), et
avec un dispositif de commande et d'évaluation (50), qui est agencé pour délivrer un signal d'identification d'objet en fonction de signaux de mesure qui sont produits à partir des rayons lumineux de mesure détectés,
**caractérisé :**
**en ce que** le dispositif d'émission-réception (10) est agencé pour émettre des rayons lumineux de mesure dans une zone de surveillance (75) de l'espace de surveillance (70), du type surface plane, qui est plus particulièrement en forme d'éventail, la zone de surveillance (75) du type surface plane comprenant au moins une zone médiane (71), au moins une première zone latérale (72) et au moins une deuxième zone latérale (73) et les première et deuxième zones latérales (72, 73) étant situées dans une direction transversale à une direction de propagation des rayons lumineux de mesure émis sur des côtés opposés de la zone médiane (71),
**en ce que** le dispositif d'émission-réception (10) est agencé pour détecter de manière séparée les uns des autres des rayons lumineux de mesure provenant de points éclairés différents sur un objet à détecter de la zone médiane (71) et des première et deuxième zones latérales (72, 73) de la zone de surveillance (75),
**en ce que** le dispositif de commande et d'évaluation (50) est agencé :
- pour générer à chaque fois, à partir des intensités des rayons lumineux de mesure détectés en provenance de la zone médiane (71), de la première zone latérale (72) et de la deuxième zone latérale (73), un signal de mesure,
- pour comparer les signaux de mesure à au moins une valeur de seuil, et
- pour délivrer, en fonction d'un résultat de ces comparaisons, un signal d'identification d'objet,
**en ce que** l'émetteur de lumière (20) comprend au moins trois éléments d'émission (20a, 20b, 20c), parmi lesquels un élément d'émission médian (20b) émet un rayon lumineux de mesure (22b) dans la zone médiane (71) et deux éléments d'émission latéraux (20a, 20c) émettent des rayons lumineux de mesure (22a, 22c) dans les deux zones latérales (72, 73),
**en ce que** le dispositif de commande et d'évaluation (50) est agencé pour commander les au moins trois éléments d'émission (20a, 20b, 20c) pour l'émission des rayons lumineux de mesure (22a, 22b, 22c) de manière séquentielle, et
**en ce que** le détecteur de lumière (30) comprend au moins un élément de réception (30a), plus particulièrement exactement un élément de réception (30a), qui est agencé de façon que des rayons lumineux de mesure venant aussi bien de la zone médiane (71) qu'également des deux zones latérales (72, 73) atteignent l'élément de réception (30a).

5. Capteur de surveillance de porte selon une des revendications 1 à 4,
**caractérisé :**
**en ce que**, pour l'émission répartie des rayons lumineux de mesure dans la zone médiane et les deux zones latérales (71, 72, 73), au moins une optique d'émission (25) est présente.

6. Procédé de surveillance de la contre-arête de fermeture (93) d'une porte (90), plus particulièrement d'une porte tournante (90),
selon lequel, à l'aide d'un dispositif d'émission-réception (10), au moins un rayon lumineux de mesure (22a à 22c) est émis dans un espace de surveillance (70) dans la zone de la contre-arête de fermeture (93) de la porte (90) et des rayons lumineux de mesure réfléchis en provenance de l'espace de surveillance (70) sont détectés,
selon lequel, en fonction de signaux de mesure qui sont produits à partir des rayons lumineux de mesure détectés, un signal d'identification d'objet est délivré,
**caractérisé :**
**en ce que** le dispositif d'émission-réception (10) émet des rayons lumineux de mesure dans une zone de surveillance (75) de l'espace de surveillance (70) du type surface plane, plus particulièrement en forme d'éventail, la zone de surveillance (75) du type surface plane comprenant au moins une zone médiane (71), au moins une première zone latérale (72) et au moins une deuxième zone latérale (73) et les première et deuxième zones latérales (72, 73) étant situées dans une direction transversale à une direction de propagation des rayons lumineux de mesure émis sur des côtés opposés de la zone médiane (71),
**en ce qu'**avec le dispositif d'émission-réception (10), des rayons lumineux de mesure provenant à chaque fois de points éclairés différents sur un objet à détecter de la zone médiane (71) et des première et deuxième zones latérales (72, 73) de la zone de surveillance (75) sont détectés séparément les uns des autres, et
**en ce qu'**un signal de mesure est généré à chaque fois à partir des intensités des rayons lumineux de mesure détectés en provenance de la zone médiane (71), de la première zone latérale (72) et de la deuxième zone latérale (73), les signaux de mesure sont comparés à au moins une valeur de seuil, et, en fonction d'un résultat de ces comparaisons, un signal d'identification d'objet est délivré, et
**en ce que** le dispositif d'émission-réception (10) comprend un détecteur de lumière (30) avec au moins un élément de réception médian (30b) et deux éléments de réception latéraux (30a, 30c), qui sont disposés de telle sorte qu'un rayon lumineux de mesure venant de la zone médiane (71) atteint l'élément de réception médian (30b) et que des rayons lumineux de mesure venant des deux zones latérales (72, 73) atteignent les deux éléments de réception latéraux (30a, 30c),
une optique de réception (35) étant présente pour conduire un rayon lumineux de mesure provenant de la zone médiane (71) sur l'élément de réception médian (30b), pour conduire un rayon lumineux de mesure provenant de la première zone latérale (72) sur le premier élément de réception latéral (30a) et pour conduire un rayon lumineux de mesure provenant de la deuxième zone latérale (73) sur le deuxième élément de réception latéral (30c).

7. Procédé de surveillance de la contre-arête de fermeture (93) d'une porte (90), plus particulièrement d'une porte tournante (90),
selon lequel, à l'aide d'un dispositif d'émission-réception (10), au moins un rayon lumineux de mesure (22a à 22c) est émis dans un espace de surveillance (70) dans la zone de la contre-arête de fermeture (93) de la porte (90) et des rayons lumineux de mesure réfléchis en provenance de l'espace de surveillance (70) sont détectés,
selon lequel, en fonction de signaux de mesure qui sont produits à partir des rayons lumineux de mesure détectés, un signal d'identification d'objet est délivré,
**caractérisé :**
**en ce que** le dispositif d'émission-réception (10) émet des rayons lumineux de mesure dans une zone de surveillance (75) de l'espace de surveillance (70) du type surface plane, plus particulièrement en forme d'éventail, la zone de surveillance (75) du type surface plane comprenant au moins une zone médiane (71), au moins une première zone latérale (72) et au moins une deuxième zone latérale (73) et les première et deuxième zones latérales (72, 73) étant situées dans une direction transversale à une direction de propagation des rayons lumineux de mesure émis sur des côtés opposés de la zone médiane (71),
**en ce qu'**avec le dispositif d'émission-réception (10), des rayons lumineux de mesure provenant à chaque fois de points éclairés différents sur un objet à détecter de la zone médiane (71) et des première et deuxième zones latérales (72, 73) de la zone de surveillance (75) sont détectés séparément les uns des autres,
**en ce qu'**un signal de mesure est généré à chaque fois à partir des intensités des rayons lumineux de mesure détectés en provenance de la zone médiane (71), de la première zone latérale (72) et de la deuxième zone latérale (73), les signaux de mesure sont comparés à au moins une valeur de seuil, et, en fonction d'un résultat de ces comparaisons, un signal d'identification d'objet est délivré,
**en ce que** le dispositif d'émission-réception (10) comprend un émetteur de lumière (20) avec au moins trois éléments d'émission (20a, 20b, 20c), parmi lesquels un élément d'émission médian (20b) émet un rayon lumineux de mesure (22b) dans la zone médiane (71) et deux éléments d'émission latéraux (20a, 20c) émettent des rayons lumineux de mesure (22a, 22c) dans les deux zones latérales (72, 73),
**en ce que** les au moins trois éléments d'émission (20a, 20b, 20c) sont commandés en vue de l'émission des rayons lumineux de mesure (22a, 22b, 22c) de manière séquentielle, et
**en ce que** le dispositif d'émission-réception (10) comprend un détecteur de lumière (30) avec au moins un élément de réception (30a), plus particulièrement exactement un élément de réception (30a), qui est agencé de façon que des rayons lumineux de mesure venant aussi bien de la zone médiane (71) qu'également des deux zones latérales (72, 73) atteignent l'élément de réception (30a).

8. Procédé selon la revendication 6 ou 7,
**caractérisé :**
**en ce que** un signal d'identification d'objet est délivré si l'intensité du rayon lumineux de mesure détecté en provenance de la zone médiane (71) dépasse les intensités des rayons lumineux de mesure détectés en provenance des première et deuxième zones latérales (72, 73) respectivement d'une valeur de seuil prédéterminée.

9. Procédé selon une des revendications 6 à 8,
**caractérisé :**
**en ce que** le capteur de surveillance de porte est monté de telle façon, sur le site d'installation, qu'une surface définie par la zone de surveillance (75) du type surface plane est alignée dans la direction de la contre-arête de fermeture (93) devant être surveillée et transversalement à une surface du vantail de porte (91) de la porte (90).
